Europäisches Patentamt

**European Patent Office**

Office européen des brevets

(11) Veröffentlichungsnummer : **0 122 229**
**B1**

(12) # EUROPÄISCHE PATENTSCHRIFT

(45) Veröffentlichungstag der Patentschrift :
25.03.87

(21) Anmeldenummer : **84810159.8**

(22) Anmeldetag : **02.04.84**

(51) Int. Cl.⁴ : **C 02 F   5/08**, C 23 F 11/08

(54) **Zusammensetzung zur Wasserbehandlung.**

(30) Priorität : 08.04.83 GB 8309573

(43) Veröffentlichungstag der Anmeldung :
**17.10.84 Patentblatt 84/42**

(45) Bekanntmachung des Hinweises auf die Patenterteilung : **25.03.87 Patentblatt 87/13**

(84) Benannte Vertragsstaaten :
**BE DE FR GB IT NL**

(56) Entgegenhaltungen :
**DE-A- 2 643 422**
**FR-A- 2 162 594**
**US-A- 4 126 549**
**Die Akte enthält technische Angaben, die nach dem**
**Eingang der Anmeldung eingereicht wurden und die**
**nicht in dieser Patentschrift enthalten sind.**

(73) Patentinhaber : **CIBA-GEIGY AG**
**Klybeckstrasse 141**
**CH-4002 Basel (CH)**

(72) Erfinder : **Wilson, David**
**4 Winchester Avenue**
**Tyldesley Manchester M29 7WP (GB)**
Erfinder : **Reverter, John Anthony**
**58 Acresfield Road**
**Pendleton Salford M6 7GE (GB)**

**0 122 229**

**Beschreibung**

Die vorliegende Erfindung betrifft Zusammensetzungen sowie ein Verfahren zur Verhinderung von Kesselsteinablagerung oder von Korrosion in wässrigen Systemen.

Wasser und wässrige Systeme können generell in zwei Kategorien eingeteilt werden. Man unterscheidet zwischen kesselsteinablagernden und zwischen korrosiven Wässern. Ein kesselsteinablagerndes Wasser wird insbesondere auf metallischen Wärmeaustauscherflächen, mit denen es in Kontakt kommt, Ablagerungen bilden ; ein solches Wasser ist normalerweise nicht korrosiv und die Ablagerungen können in einigen Fällen sogar das Metall gegen Korrosion schützen. Ein kesselsteinbildendes Wasser kann aber durchaus auch korrosiv wirken, wenn man beispielsweise seinen pH-Wert ändert. In den meisten Fällen kann man Additive für wässrige Systeme in eine der Kategorien Antikesselsteinzusatz oder Antikorrosionsmittel einordnen. Es gibt jedoch auch Wässer, die sowohl Ablagerungen bilden als auch korrodierend wirken. Es besteht also ein Bedarf für Zusätze, die sowohl die Kesselsteinablagerung verhindern als auch die Korrosionseigenschaften des Wassers herabsetzen. Eine Kategorie von Anti-Kesselstein Additiven zeigt den sogenannten « Schwelleneffekt » ; diese Stoffe werden dem Wasser oder den wässrigen Systemen in sehr kleinen Mengen zugesetzt (gemessen an den Mengen des sich ablagernden Stoffes) und setzen dann einerseits die Geschwindigkeit der Niederschlagsbildung herab und modifizieren andererseits die Eigenschaften der ausfallenden Feststoffe so, dass sich diese nicht als festhaftende Ablagerungen an Wärmeaustauscherflächen absetzen können. Ein solcher Belag kann also leicht mechanisch von der betreffenden Unterlage entfernt werden.

Für diesen Zweck sind mehrere Additive vorgeschlagen worden, darunter gewisse Polyphosphate oder Polycarbonsäuren, wie beispielsweise Polyacrylsäure, Polymethacrylsäure, hydrolysiertes Polymaleinsäureanhydrid oder hydrolysierte Copolymere von Maleinsäureanhydrid und olefinischen Monomeren bzw. Mischungen von olefinischen Monomeren, wobei das Mischungsverhältnis von Maleinsäureanhydrid und Olefinen von 2,5 : 1 bis zu 100 : 1 variiert wird.

Um die Bildung von Ablagerungen und korrosiven Angriff von Wasser oder wässrigen Systemen auf Metalloberflächen zu verhindern sind Kombinationen von Anti-Kesselsteinmitteln mit Quellen von Zinkionen, beispielsweise Zinksalzen, vorgeschlagen werden. Solche Kombinationen beruhen auf der Basis von Polyphosphaten oder organischen Phosphonsäuren oder, wie in der GB-A 1,374,270 beschrieben, auf der Basis von hydrolysiertem Polymaleinsäureanhydrid.

Weitere Vorschläge betreffen Polymere im Molekulargewichtsbereich von 1 000 bis 10 000 im Kombination mit Zinkmolybdat, wobei als Polymere Polyacrylsäure, Polymethacrylsäure bzw. Copolymers aus Acrylsäure oder Methacrylsäure mit Fumarsäure oder Maleinsäure eingesetzt werden.

Es wurde überraschenderweise gefunden, dass das hydrolysierte Copolymer von Maleinsäureanhydrid und einem oder mehreren ethylenisch ungesättigten Monomeren, welches ein Molekulargewicht bis 1 000 besitzt, zusammen mit einer Zinkionenquelle angewendet, zu einer synergistischen Wirkung beider Komponenten führt. Die erfindungsgemässe Zusammensetzung besitzt verglichen mit ähnlichen Mischungen anderer Polycarbonsäuren verbesserte korrosionsinhibitierende Eigenschaften.

Die vorliegende Erfindung betrifft eine Zusammensetzung zur Wasserbehandlung enthaltend 2,5 bis 80 Gew.-% Zink (berechnet als $Zn^{2+}$) und 97,5 bis 20 Gew.-% eines hydrolysierten Copolymeren, dass sich von Maleinsäureanhydrid und einem mono-ethylenisch ungesättigten Monomeren oder einer Mischung solcher Monomeren ableitet, wobei das molare Verhältnis von Maleinsäureanhydrid zur Gesamtmenge der restlichen Monomeren zwischen 1 : 1 und 100 : 1 variiert und wobei das Molekulargewicht des Copolymeren, bestimmt durch Dampfphasenosmometrie, bis zu 1 000 beträgt.

Die hydrolisierten Copolymere, welche in der vorliegenden Erfindung Verwendung finden, sind in der GB-A 1,414,918 beschrieben.

Das molare Verhältnis von Maleinsäureanhydrid zur Gesamtmenge der restlichen Monomeren beträgt vorzugsweise 2,5 : 1 bis 100 : 1, insbesondere 2,5 : 1 bis 30 : 1 und besonders bevorzugt 2,5 : 1 bis 7 : 1. Das Molekulargewicht des Polymeren beträgt vorzugsweise 300 bis 1 000.

Als mono-ethylenisch ungesättigte Monomere finden eine Menge von Verbindungen Anwendung. Beispielsweise lassen sich Acrylsäure, Methacrylsäure, Crotonsäure, Itaconsäure, Aconitsäure, Undecylensäure (und deren Ester), Itaconsäureanhydrid, Ethylacrylat, Methylmethacrylat, Acrylnitril, Acrylamid, Methacrylamid, Vinylacetat, Styrol, α-Methylstyrol, Methylvinylketon, Ethylen, Propylen, Decen, Hexadecen oder Mischungen dieser Monomeren verwenden.

Wenn Mischungen von Monomeren eingesetzt werden, kann das resultierende Polymer beispielsweise ein Terpolymer von Maleinsäureanhydrid und zwei weiteren Monomeren sein. Solche Terpolymere leiten sich beispielsweise ab von Maleinsäureanhydrid, Vinylacetat und Ethylacrylat. Andere geeignete Kombinationen sind in der folgenden Tabelle I aufgeführt.

Besonders bevorzugt werden diejenigen Copolymere, die sich von Maleinsäureanhydrid und Styrol oder Acrylsäure und deren Estern oder Methacrylsäure und deren Estern oder Vinylestern der Carbonsäuren ableiten.

Die Copolymeren lassen sich durch Polymerisation in einem reaktiven Lösungsmittel herstellen unter Anwendung eines radikalischen Starters wie beispielsweise Benzoylperoxid, Di-tert.butylperoxid oder Monobutylhydroperoxid. Das entstandene Polymer fällt aus der Reaktionslösung aus.

2

# 0 122 229

Als reaktive Lösungsmittel lassen sich beispielsweise Xylol, Toluol, Ethylbenzol, Tetrachlorkohlenstoff, Chloroform oder Cumol verwenden. Besonders bevorzugt werden Xylol und Toluol.

Ein reaktives Lösungsmittel besitzt die Funktion eines Kettenabbrechers und ist besonders bei kurzkettigen Polymeren zu geringem Anteil im Polymermolekül vorhanden. Solche kurzkettigen Polymere werden auch Co-Telomere genannt. Beispiele für Reaktanden zur Telomerisation und für geeignete reaktive Lösungsmittel sind in der folgenden Tabelle I aufgeführt.

(Siehe Tabelle I Seite 4 f.)

Die Menge des Kettenstarters kann in einem weiten Bereich variiert werden, sie hängt zu einem gewissen Mass vom Mengenverhältnis der eingesetzten Monomeren ab. Sämtliche Copolymere lassen sich herstellen, wenn bis zu 20 Gew.-% Kettenstarter verwendet werden (bezogen auf das Gewicht der Monomeren). Eine grössere Menge an Starter ist nur dann nötig, wenn Copolymere mit einem hohen Anteil an Maleinsäureanhydrid bezogen auf den Anteil der restlichen Monomeren hergestellt werden sollen, bei denen dieser Anteil beispielsweise 14 : 1 bis 29 : 1 beträgt. Wenn der Anteil an Maleinsäureanhydrid herabgesetzt wird, kann auch der Anteil an Kettenstarter verkleinert werden, ohne dass die Ausbeute der Polymerisation verringert wird.

Die Reaktanden können auf unterschiedliche Weise zur Reaktion gebracht werden. Man kann beispielsweise den Starter einer Lösung der Monomeren zugeben oder man tropft die Lösung der Monomeren mit dem Starter in ein erhitztes Lösungsmittel.

Das entstandene Polymer kann vor seinem Einsatz im wässrigen System hydrolysiert werden. Diese Hydrolyse kann in Wasser, in einer Lauge oder einer Mineralsäure ausgeführt werden. Als Zinkionenquelle finden beliebige wasserlösliche Zinksalze Verwendung. Beispielsweise lassen sich Zinkborat, -chlorid, -nitrat, -sulfat oder -molybdat einsetzen.

Die erfindungsgemässe Zusammensetzung enthält vorzugsweise zwischen 10 und 60 Gew.-% Zink und zwischen 90 und 40 Gew.-% hydrolysiertes Copolymer.

Die vorliegende Erfindung betrifft weiterhin ein Verfahren zur Verhinderung von Korrosion und Ablagerung von Kesselstein durch Wasser oder wässrige Systeme, dadurch gekennzeichnet, dass man dem Wasser oder dem wässrigen System 0,1 bis 500 ppm, vorzugsweise 1 bis 200 ppm einer Zusammensetzung wie oben beschrieben zusetzt.

Die erfindungsgemässe Zusammensetzung kann noch weitere gängige Zusätze enthalten. Insbesondere kann die Zusammensetzung mit weiteren Inhibitoren, beispielsweise Metalldesaktivatoren, verwendet werden. Insbesondere Inhibitoren zum Schutz von Kupfer, wie beispielsweise Benztriazol, Tolutriazol, 5,5-Methylen-bis-benztriazol oder weitere Derivate dieser Substanzen finden Verwendung. Weiterhin kann auch ein Silikat zugesetzt werden, um die Korrosion von Aluminium zu verhindern. Auch andere Korrosionsinhibitoren für Eisenmetalle wie beispielsweise Chromderivate, Nitrite, Amine wie Cyclohexylamin, Morpholin, Distearylamin/Ethylenoxidkondensationsprodukte oder Stearylamin, Natriumsulfat und Magnesiumsulfat lassen sich mit den erfindungsgemässen Zusammensetzungen verwenden. Auch lassen sich weitere Zusätze zur Wasserbehandlung mit den erfindungsgemässen Zusammensetzungen kombinieren. So finden dispergierende und/oder Kesselstein inhibierende Mittel wie beispielsweise Polyacrylsäure oder deren Salze, hydrolisiertes Polyacrylnitril, Polymethacrylsäure oder deren Salze, Polyacrylamid und Copolymere von Acrylamid und Acrylsäure oder Methacrylsäure Verwendung. Auch Ligninsulfonsäuren oder deren Salze, Tannin, Naphthalinsulfonsäure/Formaldehydkondensationsprodukte, Stärke und deren Derivate, Cellulosederivate wie beispielsweise Carboxymethylcellulose lassen sich einsetzen.

Aber auch Copolymere von Acrylsäure und Niederalkylhydroxyacrylaten, wie in der US-PS 4,029,577 beschrieben, Copolymere von sulfoniertem Styrol und Maleinsäureanhydrid oder sulfoniertes Polystyrol, so wie in der US-PS 4,374,733 beschrieben, oder Kombinationen dieser Polymeren lassen sich verwenden.

Auch können Kesselsteininhibitierende Mittel wie beispielsweise Polymaleinsäure und deren Salze, Alkylphosphonsäuren, 1-Aminoalkyl-1,1-diphosphonsäuren und deren Salze oder Alkaliphosphate eingesetzt werden.

Fällungsmittel wie beispielsweise Alkaliorthophosphate, Carbonate oder Hydroxide oder Sauerstoffänger wie beispielsweise Alkalisulfide oder Hydrazin können ebenfalls mit den erfindungsgemässen Zusammensetzungen kombiniert werden.

Auch finden Komplexierungsmittel wie beispielsweise Nitriloessigsäure, EDTA oder deren Salze Anwendung.

Zusätzlich kann man schaumbrechende Mittel wie beispielsweise Distearylsebacincamid, Distearyladipinamid oder ähnliche Produkte, die sich von der Kondensation des Ethylenoxids ableiten, oder Additionsprodukte von Fettalkoholen und Ethylenoxidkondensationsprodukten einsetzen.

In den folgenden Beispielen wird eine generelle Methode zur Herstellung von Copolymeren, so wie sie in den erfindungsgemässen Zusammensetzungen verwendet werden, beschrieben.

3

## Tabelle I

Zusammensetzung von Copolymerisaten, die in reaktiven Lösungsmitteln polymerisiert werden

| Mole Maleinsäureanhydrid | Mole an erstem Comonomer | Mole an zweitem Comonomer | Lösungsmittel |
|---|---|---|---|
| 2,5 | 0,5 Ethylacrylat | 0,5 Vinylacetat | Toluol |
| 4,0 | 1,0 Ethylacrylat | --- | Xylol |
| 10,0 | 1,0 Ethylacrylat | --- | Toluol |
| 4,0 | 1,0 Vinylacetat | --- | Ethylbenzol |
| 6,0 | 1,0 Vinylacetat | 1,0 Ethylacrylat | Xylol |
| 29,0 | 1,0 Vinylacetat | --- | Toluol |
| 2,5 | 1,0 Ethylen | --- | Toluol |
| 2,5 | 1,0 Propylen | --- | Xylol |
| 3,0 | 0,5 Methylvinylketon | 0,5 Vinylacetat | Toluol |
| 14,0 | 1,0 Methylvinylketon | --- | Toluol |
| 3,0 | 1,0 Methylmethacrylat | --- | Toluol |
| 6,0 | 1,0 Methylmethacrylat | 1,0 Ethylacrylat | Xylol |
| 3,0 | 0,5 Acrylnitril | 0,5 Vinylacetat | Ethylbenzol |
| 3,0 | 0,5 Crotonsäure | 0,5 Vinylacetat | Tetrachlorkohlenstoff |
| 24,0 | 4,0 Styrol | 2,0 Ethylacrylat | Tetrachlorkohlenstoff |
| 7,0 | 1,0 Styrol | --- | Toluol |
| 4,0 | 1,0 Styrol | --- | Toluol |

### 1. Polymersationsstufe

Eine Lösung aus 98 Gewichtsteilen Maleinsäureanhydrid in 100 Gewichtsteilen Xylol wird bei 144 °C unter Rückfluss erhitzt. Zu dieser Lösung fügt man tropfenweise über einen Zeitraum von 2 Stunden eine Lösung der Comonomeren (des Comonomers) und Di-tert.-butylperoxid (1,3 Gew.-% bezogen auf die Gesamtmenge an Monomeren) in 40 Gewichtsteilen Xylol. Nach Beendigung der Zugabe wird die Reaktionslösung weitere 2 Stunden unter Rückfluss gekocht und anschliessend auf 95 °C abgekühlt.

### 2. Hydrolysestufe

Zu der abgekühlten Reaktionslösung werden 170 Gewichtsteile Wasser tropfenweise innerhalb von 30 Minuten hinzugefügt. Die resultierende Mischung wird bei 95 °C solange gerührt bis sich das gesamte Copolymere aufgelöst hat (üblicherweise 1 Stunde). Anschliessend lässt man auf 30 °C abkühlen und trennt die wässrige Phase im Scheidetrichter ab.

Das Wasser wird verdampft und der Rückstand bei 105 °C bis zur Gewichtskonstanz getrocknet.

Falls das Copolymere in der Anhydridform benötigt wird, kann folgende Prozedur durchgeführt werden :

Nach Beendigung der Polymerisationsstufe wird die Reaktionslösung auf 30 °C heruntergekühlt und die obere Xylolphase abdekantiert. Das Copolymere wird in 50 Gewichtsteilen Methylethylketon gelöst und durch Einrühren in 1 000 Teile Toluol wieder ausgefällt. Der erhaltene feste Rückstand wird abfiltriert, zweimal mit 200 Gewichtsteilen n-Hexan gewaschen und anschliessend im Vakuum bei 40 °C bis zur Gewichtskonstanz getrocknet. Dieses Copolymere in der Anhydridform kann durch einstündige Behandlung in kochendem Wasser in die Polycarbonsäure überführt werden.

Copolymere, die weitere hydrolysierbare Comonomere enthalten, wie beispielsweise Vinylacetat, Acrylnitril, Acrylamid, Ethylacrylat, können hydrolysiert werden, indem man das Copolymere in der Anhydridform mit einer äquivalenten Menge Alkali oder Säure umsetzt.

### Anwendungsbeispiele 1 bis 3

Es werden Labortests mit einer Wärmeaustauscheranlage durchgeführt. Diese Form des Tests wird deshalb gewählt, um Anwendungen in der Praxis zu simulieren.

In der Testanlage wird belüftetes Wasser verwendet, das über mehrere Metallstücke geleitet wird und anschliessend über einen Wärmeaustauscher aus Flusstahl gepumpt wird. Nach Beendigung des Tests werden Wärmeaustauscher und Metallstücke hinsichtlich des Korrosionsgrads beurteilt.

Der experimentelle Aufbau besteht im Einzelnen aus einem geschlossenen Wasserkreislauf. Das System besteht aus folgenden Einheiten :

20 Liter Vorratsbehälter
Strömungsmesser
Behälter für die Metallstücke
Wärmeaustauscher
Pumpe
Ventil zur Regulation des Durchflusses.

Im Vorratsbehälter werden 20 l Testwasser mit Pressluft durchspült, die in einer Menge von 500 ml pro Minute durch eine Sinterscheibe in das Wasser eingepresst wird. Das so behandelte Wasser wird von hier aus über den Wärmeaustauscher gepumpt, durchfliesst anschliessend den Strömungsmesser und den Behälter für die Metallstücke und gelangt dann in den Vorratsbehälter zurück.

Die Fördermenge der Pumpe beträgt 4 Liter pro Minute was einer Geschwindigkeit von 0,3 m/sec über den Wärmeaustauscher entspricht. Die zugeführte Wärme wird so einreguliert, dass im Vorratsbehälter eine Temperatur von 40 °C erreicht wird.

Die Metallstücke werden zu Beginn des Tests mit Bimsstein geschrubbt und anschliessend je nach Metall einer Säurebehandlung unterzogen (vergl. folgende Tabelle) :

### Tabelle

| Metall | Säurebehandlung |
|---|---|
| Flusstahl | Konz. Salzsäure verdünnt mit Wasser (1:1); 1 Minute bei Raumtemperatur |
| Kupfer | Konz. Salzsäure verdünnt mit Wasser (1:1); 1 Minute bei Raumtemperatur |

Tabelle (Fortsetzung)

| Metall | Säurebehandlung |
|--------|-----------------|
| Messing | Konz. Salzsäure verdünnt mit Wasser (1:1); 1 Minute bei Raumtemperatur |
| Aluminium | Konz. Salpetersäure; 30 Minuten |

Nach der Säurebehandlung werden die Metallstücke in fliessendem Wasser abgespült, getrocknet und gewogen. Anschliessend werden sie auf eine Perspex Halterung montiert, wobei darauf geachtet wird, dass die Stücke sich nicht berühren. Auch dürfen sie den Bolzen, der die Halterung trägt, nicht berühren.

Der Wärmeaustauscher aus Flusstahl wird ebenfalls mit Bimsstein geschrubbt, in verdünnte Salzsäure (1 : 1 mit Wasser) getaucht, anschliessend mit Wasser gespült, getrocknet und gewogen.

Die Testapparatur wird zusammengesetzt, nochmals gereinigt, indem mit Wasser verdünnte Salzsäure (1 : 1) zirkulieren gelassen wird. Anschliessend wird 3 Stunden mit Wasser gespült und dann leerlaufen gelassen.

Nun gibt man die für den jeweiligen Versuch benötigte Menge an Additiven in die Apparatur and füllt die Anlage anschliessend mit 20 Litern Testwasser. Dieses Wasser ist durch folgende Parameter charakterisiert (vergleiche die folgende Tabelle) :

Tabelle

|  | Wasser A | Wasser B |
|--|----------|----------|
| pH-Wert | 7,0 | 7,6 |
| Phenolische Alkalinität (ppm) | 0 | 0 |
| Gesamte Alkalinität (ppm) | 40 | 280 |
| Gesamthärte (als ppm $CaCO_3$) | 40 | 290 |
| Chloride (ppm) | 12 | 50 |

Pumpe und Heizquelle werden in Betrieb genommen und nach drei Tagen wird der Test unterbrochen. Das Wasser wird abgelassen und die Apparatur anschliessend mit 20 l Frischwasser gefüllt, das eine geringere Dosis an Additiven enthält als zu Beginn des Tests. Der Versuch wird anschliessend weitere zehn Tage fortgesetzt. Danach wird er beendet, das Wasser abgelassen, die Metallstücke entnommen und wie zu Beginn gereinigt, mit einer Ausnahme, dass die verdünnte Salzsäure (1 : 1 mit Wasser) mit 1 % Hexamethylendiamin inhibitiert ist. Die Proben werden dann mit Wasser abgespült, getrocknet und wiederum gewogen.

Der Wärmeaustauscher wird abmontiert, mechanisch gereinigt, in mit Wasser 1 : 1 verdünnte Salzsäure, die mit 1 % Hexamethylendiamin inhibitiert ist, getaucht, mit Wasser abgespült, getrocknet und ebenfalls gewogen.

Alle getestenten Additive werden in einer Konzentration von 50 ppm eingesetzt (während der ersten drei Tage) zusammen mit 12 ppm $Zn^{2+}$ und 2 ppm Benztriazol, wobei die Konzentration des Additivs während des letzten Teils der Testphase 10 ppm, die des $Zn^{2+}$ 2,5 ppm und die des Benztriazols 2 ppm betragen.

$Zn^{2+}$ wird als Zinknitrathexahydrat zugegeben. Die untersuchten Additive sind in der folgenden Tabelle 1 aufgelistet.

Tabelle 1

(Organische Zusätze, die in den Anwendungstests verwendet werden)

| Beispiel | Additiv |
|----------|---------|
| A | --- |
| 1 | Hydrolysiertes Telomer bestehend aus 4 Molen Maleinsäureanhydrid und 1 Mol Styrol |

Tabelle 1 (Fortsetzung)

| Beispiel | Additiv |
|---|---|
| 2 | Hydrolysiertes Telomer bestehend aus 7 Molen Maleinsäureanhydrid und 1 Mol Styrol |
| 3 | Hydrolysiertes Telomer bestehend aus 6 Molen Maleinsäureanhydrid, 1 Mol Vinylacetat und 1 Mol Ethylacrylat |
| 4 | Hydrolysiertes Telomer bestehend aus 24 Molen Maleinsäureanhydrid, 4 Molen Styrol und 2 Molen Ethylacrylat |
| 5 | Hydrolysiertes Telomer bestehend aus 3 Molen Maleinsäureanhydrid und 1 Mol Styrol |
| 6 | Hydrolysiertes Telomer bestehend aus 5 Molen Maleinsäureanhydrid und 1 Mol Styrol |

Die Testergebnisse sind in den folgenden Tabellen 2 und 3 aufgelistet :

Tabelle 2

Korrosionsgrad in mg Metall pro $dm^2$ und Tag bei Verwendung von Wasser des Typs A

| Additiv | Flusstahlstücke | Wärmeaustauscher aus Flusstahl |
|---|---|---|
| A | 105,0 | 108,8 |
| 1 | 19,7 | 23,1 |
| 4 | 7,8 | 21,2 |

Tabelle 3

Korrosionsgrad in mg Metall pro $dm^2$ und Tag bei Verwendung von Testwasser des Typs B

| Additiv | Flusstahlstücke | Wärmeaustauscher aus Flusstahl |
|---|---|---|
| A | 72,4 | 79,5 |
| 1 | 11,6 | 14,7 |
| 2 | 2,9 | 13,5 |
| 3 | 5,4 | 14,7 |
| 5 | 6,2 | 17,3 |
| 6 | 5,7 | 18,6 |

Die Kupfer-, Stahl- und Aluminiumproben zeigten, dass die erfindungsgemässe Zusammensetzung keinen negativen Effekt auf die Wirkung des Benztriazols ausübt.

**Patentansprüche**

1. Zusammensetzung zur Wasserbehandlung enthaltend 2,5 bis 80 Gew.-% Zink (berechnet als $Zn^{2+}$) und 97,5 bis 20 Gew.-% eines hydrolysierten Copolymeren, dass sich von Maleinsäureanhydrid und einem einfach ethylenisch ungesättigten Monomeren oder einer Mischung solcher Monomeren ableitet, wobei das molare Verhältnis von Maleinsäureanhydrid zur Gesamtmenge der restlichen Monomeren zwischen 1 : 1 und 100 : 1 variiert und wobei das Molekulargewicht des Copolymeren bis zu 1 000 beträgt.

2. Zusammensetzung gemäss Anspruch 1 enthaltend 10 bis 60 Gew.-% Zink und 90 bis 40 Gew.-% des hydrolysierten Copolymeren.

3. Zusammensetzung gemäss Anspruch 1, worin das molare Verhältnis von Maleinsäureanhydrid zur Gesamtmenge der restlichen Monomeren zwischen 2,5 : 1 und 100 : 1 variiert.

4. Zusammensetzung gemäss Anspruch 3, worin das molare Verhältnis von Maleinsäureanhydrid zur Gesamtmenge der restlichen Monomeren zwischen 2,5 : 1 und 7 : 1 variiert.

5. Zusammensetzung gemäss Anspruch 1, worin das Copolymere aus Maleinsäureanhydrid und Styrol besteht.

6. Zusammensetzung gemäss Anspruch 1, worin das Copolymere aus Maleinsäureanhydrid, Ethylacrylat und Vinylacetat besteht.

7. Zusammensetzung gemäss Anspruch 1, worin das Copolymere ein Molekulargewicht von 300 bis 1 000 besitzt.

8. Verfahren zur Verhinderung von Korrosion und Ablagerung von Kesselstein durch Wasser oder wässrige Systeme, dadurch gekennzeichnet, dass man das Wasser oder das wässrige System mit 0,1 bis 500 ppm einer Zusammensetzung gemäss Anspruch 1 behandelt.

9. Verfahren gemäss Anspruch 8, dadurch gekennzeichnet, dass man 1 bis 200 ppm der Zusammensetzung verwendet.


**Claims**

1. A composition for treating water which comprises 2.5 to 80 % by weight of zinc (calculated as $Zn^{2+}$) and from 97.5 to 20 % by weight of a hydrolysed copolymer of maleic anhydride with a monoethylenically unsaturated monomer or a mixture of monomers, the molar ratio of maleic anhydride to the total of other monomers being from 1 : 1 to 100 : 1, the molecular weight of the copolymer being up to 1 000.

2. A composition as claimed in claim 1 which comprises from 10 to 60 % by weight of zinc and from 90 to 40 % by weight of the hydrolysed copolymer.

3. A composition as claimed in claim 1 in which the molar ratio of maleic anhydride to the total of the other monomers is from 2.5 : 1 to 100 : 1.

4. A composition as claimed in claim 3 in which the ratio of maleic anhydride to the total of the other monomers is from 2.5 : 1 to 7 : 1.

5. A composition as claimed in claim 1 in which the copolymer is formed from maleic anhydride and styrene.

6. A composition as claimed in claim 1 in which the copolymer is formed from maleic anhydride, ethyl acrylate and vinyl acetate.

7. A composition as claimed in claim 1 in which the copolymer has a molecular weight of from 300 to 1 000.

8. A process for inhibiting the corrosion and scale forming tendencies of water or an aqueous system which comprises treating the water or aqueous system with from 0.1 to 500 ppm of a composition as claimed in claim 1.

9. A process as claimed in claim 8 in which from 1 to 200 ppm of the composition are used.


**Revendications**

1. Composition pour le traitement d'eaux comprenant 2,5 à 80 % en poids de zinc (en $Zn^{2+}$) et 97,5 à 20 % en poids d'un copolymère hydrolysé d'anhydride maléique et d'un ou de plusieurs monomères monoéthyléniques, le rapport molaire de l'anhydride maléique à la quantité totale des autres monomères étant compris entre 1 et 100 et la masse moléculaire du copolymère pouvant s'élever jusqu'à 1 000.

2. Composition selon la revendication 1 qui contient 10 à 60 % en poids de zinc et 90 à 40 % du copolymère hydrolysé.

3. Composition selon la revendication 1 dans laquelle le rapport molaire de l'anhydride maléique à la quantité totale des autres monomères est compris entre 2,5 et 100.

4. Composition selon la revendication 3 dans laquelle le rapport molaire de l'anhydride maléique à la quantité totale des autres monomères est compris entre 2,5 et 7.

5. Composition selon la revendication 1 dans laquelle le copolymère est un copolymère d'anhydride maléique et de styrène.

6. Composition selon la revendication 1 dans laquelle le copolymère est un copolymère d'anhydride maléique, d'acrylate d'éthyle et d'acétate de vinyle.

7. Composition selon la revendication 1 dans laquelle le copolymère a une masse moléculaire de 300 à 1 000.

8. Procédé pour empêcher la corrosion et le dépôt de tartre par de l'eau ou des milieux aqueux, procédé caractérisé en ce que l'on traite l'eau ou les milieux aqueux avec 0,1 à 500 ppm d'une composition selon l'une quelconque des revendications précédentes.

9. Procédé selon la revendication 8 caractérisé en ce que l'on ajoute 1 à 200 ppm de la composition.